# EUROPEAN PATENT SPECIFICATION

(11) **EP 3 502 969 B1**
(45) Date of publication and mention of the grant of the patent: **05.07.2023**
(21) Application number: 17841065.0
(22) Date of filing: 16.08.2017
(51) Int. Cl.: G06K 19/06, G06K 7/14

(54) **OBJECT PROVIDED WITH TWO-DIMENSIONAL CODE, METHOD FOR GENERATING TWO-DIMENSIONAL CODE, AND RECOGNITION METHOD AND APPARATUS**
MIT ZWEIDIMENSIONALEM CODE VERSEHENES OBJEKT, VERFAHREN ZUR ERZEUGUNG EINES ZWEIDIMENSIONALEN CODES UND ERKENNUNGSVERFAHREN UND -VORRICHTUNG
OBJET POURVU D'UN CODE BIDIMENSIONNEL, PROCÉDÉ DE GÉNÉRATION DE CODE BIDIMENSIONNEL, ET PROCÉDÉ ET APPAREIL DE RECONNAISSANCE

(30) Priority: 18.08.2016 CN 201610688875
(43) Date of publication of application: 26.06.2019
(73) Proprietor: Tencent Technology (Shenzhen) Company Limited, Shenzhen, Guangdong 518057 (CN)
(72) Inventor: LIN, Yugeng, Shenzhen, Guangdong 518057 (CN); XU, Dianping, Shenzhen, Guangdong 518057 (CN); RAN, Chen, Shenzhen, Guangdong 518057 (CN); HUANG, Huajie, Shenzhen, Guangdong 518057 (CN); LIU, Yike, Shenzhen, Guangdong 518057 (CN); YANG, Zhangjing, Shenzhen, Guangdong 518057 (CN); WANG, Hongyang, Shenzhen, Guangdong 518057 (CN); ZOU, Tao, Shenzhen, Guangdong 518057 (CN); YU, Hongxiao, Shenzhen, Guangdong 518057 (CN); CHEN, Pinlin, Shenzhen, Guangdong 518057 (CN); ZHOU, Junjie, Shenzhen, Guangdong 518057 (CN); MO, Jubo, Shenzhen, Guangdong 518057 (CN); HUANG, Ting, Shenzhen, Guangdong 518057 (CN)
(74) Representative: Eisenführ Speiser
(86) International application number: PCT/CN2017/097640
(87) International publication number: WO 2018/033093

(56) References cited:
- WO-A1-2011/087030
- WO-A1-2017/148704
- CN-A- 101 944 187
- CN-A- 105 550 726
- CN-A- 106 372 699
- US-A1- 2008 110 990
- US-A1- 2014 239 072
- US-A1- 2015 090 796
- US-B1- 6 267 296

## Description

### FIELD OF THE TECHNOLOGY

This application relates to the technical field of information processing, and in particular to an object on which a two-dimensional code is provided, a two-dimensional code generation method, a two-dimensional code identification method, a two-dimensional code generation device, a two-dimensional code identification device, and a storage medium.

### BACKGROUND OF THE DISCLOSURE

With continuous development of information processing technologies, two-dimensional codes are widely used due to features of wide encoding ranges, strong fault tolerance capability and use convenience. A quick response (QR) two-dimensional code is one type of two-dimensional code. The QR two-dimensional code includes a square module array consisting of square modules arranged in n rows by n columns. Each of the modules is a minimal identification unit.

Currently, there are 40 versions of two-dimensional codes, which are separately version 1 to version 40. A dimension of the version 1 is 21^{∗}21 modules, and each later version includes four more modules than a previous version in both a row direction and a column direction, until the version 40. The dimension of the version 40 is 177*177 modules.

In some scenarios, a two-dimensional code needs to be printed on a small area, for example, an inner side of a beverage bottle cap. Even if a two-dimensional code of the version 1 is printed on an inner side of the beverage bottle cap, the two-dimensional code cannot be normally identified because the printed pattern is small.

US 2008/0110990 A1 discloses a method of printing a two-dimensional barcode by tilting the print head, which results in tilted barcode, and methods of detecting various types of attempts to forge the tilted barcode including: (i) a low level forgery that consists of a simple scan and reprint of the barcode, (ii) a low level forgery that consists of a reproduction (i.e., a read and regeneration) and subsequent printing of the barcode using a printer with a non-tilted print head by a fraudster that is not aware of the tilt in the original barcode, and (iii) a higher level forgery by a fraudster that is aware of the tilt in the original barcode and that digitally tilts/shears an image of the barcode and prints the digitally tilted/sheared image using a printer with a non-tilted print head in an effort to mimic the tilt present in the legitimate barcode.

US 2015/0090796 A1 discloses a method and system for detecting a correction pattern in a QR code. In the detection of a correction pattern, coordinates of the correction pattern is at first roughly estimated according to the detected coordinates of the detection patterns and different QR code versions, then a square region is specified around the coordinates of the correction pattern, in which a search is performed repeatedly. Finally, in conjunction with the characteristic of the correction pattern itself, i.e., having a line segment meeting a predetermined ratio, the correction pattern may be accurately located in the predetermined area, without the need of searching patterns meeting a 1:1:1 ratio line by line in the entire QR code image.

WO 2017/148704 A1 relates to a security document comprising a first security element that contains a visible and in particular machine-readable first piece of information, and a second security element that contains an in particular machine-readable second piece of information which can be used to verify the first piece of information. The invention further relates to a method for authenticating said security document.

US 2014/0239072 A1 discloses a method and device for automatically converting a sign and a method for automatically reading a sign. The method for automatically converting a sign comprises: disposing a first number of modules dispersedly within the sign, the first number being equal to a number of modules of a two-dimensional code that denote the sign; determining a mapping relation between the first number of modules and the respective modules of the two-dimensional code; and setting the first number of modules respectively to have same properties as the respective modules to which they are mapped of the two-dimensional code, so as to generate a converted sign.

US 6,267,296 B1 discloses a two-dimensional code made up of a matrix of cells formed with dark and light squares arranged in a pattern carrying an optically readable binary-coded data, and a method of reading such a two-dimensional code. The two-dimensional code features a structure in which at least two data regions are defined in a data field of the matrix. One of the data regions retains a code represented by the cells having a larger size, while the other data region retains a code represented by the cells having a smaller size. The use of cells of different sizes in representing the codes allows the codes to be read correctly under different conditions.

### SUMMARY

According to embodiments of this application, an object on which a two-dimensional code is provided, a two-dimensional code identification method, a two-dimensional code identification device, and a non-volatile storage medium are provided.

The invention is defined by claim 1.

According to the embodiments of this application, a miniature two-dimensional code is provided. The two-dimensional code includes a square module array consisting of m*m modules, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

### BRIEF DESCRIPTION OF THE DRAWINGS

To describe the technical solutions in the embodiments of this application more clearly, the accompanying drawings required for describing the embodiments are described simply hereinafter. Apparently, the accompanying drawings in the following description show merely some embodiments of this application, and a person of ordinary skill in the art may obtain other drawings from these accompanying drawings without creative efforts.
FIG. 1A is a schematic structural diagram of an object on which a two-dimensional code is provided according to an embodiment of this application;
FIG. 1B is a schematic structural diagram of an object on which a two-dimensional code is provided according to another embodiment of this application;
FIG. 1C is a schematic structural diagram of an object on which a two-dimensional code is provided according to still another embodiment of this application;
FIG. 1D is a schematic structural diagram of an object on which a two-dimensional code is provided according to yet another embodiment of this application;
FIG. 2 is a schematic structural diagram of a two-dimensional code according to an embodiment of this application;
FIG. 3 is a schematic structural diagram of a two-dimensional code according to another embodiment of this application;
FIG. 4 is a flowchart of a two-dimensional code identification method according to an embodiment of this application;
FIG. 5 is a flowchart of a two-dimensional code identification method according to another embodiment of this application;
FIG. 6 is a flowchart of a two-dimensional code generation method according to an embodiment of this application;
FIG. 7 is a flowchart of a two-dimensional code generation method according to another embodiment of this application;
FIG. 8 is a schematic principle diagram of a two-dimensional code generation method according to an embodiment of this application;
FIG. 9 is a flowchart of a two-dimensional code generation method according to still another embodiment of this application;
FIG. 10 is a flowchart of a two-dimensional code generation method according to yet another embodiment of this application;
FIG. 11 is a schematic structural diagram of a two-dimensional code identification device according to an embodiment of this application;
FIG. 12 is a schematic structural diagram of a two-dimensional code identification device according to another embodiment of this application;
FIG. 13 is a schematic structural diagram of a two-dimensional code generation device according to an embodiment of this application;
FIG. 14 is a schematic structural diagram of a two-dimensional code generation device according to another embodiment of this application;
FIG. 15 is a schematic structural diagram of a two-dimensional code generation device according to still another embodiment of this application;
FIG. 16 is a schematic structural diagram of a two-dimensional code generation device according to yet another embodiment of this application;
FIG. 17 is a structural block diagram of a terminal according to an embodiment of this application;
FIG. 18 is a structural block diagram of a server according to an embodiment of this application;
FIG. 19 is a schematic structural diagram of a two-dimensional code according to an embodiment of this application; and
FIG. 20 shows a two-dimensional code pattern generated by using a square module array according to an embodiment of this application.

### DESCRIPTION OF EMBODIMENTS

To make the objectives, technical solutions, and advantages of the present disclosure clearer, embodiments of the present disclosure are described in detail with reference to the accompanying drawings.

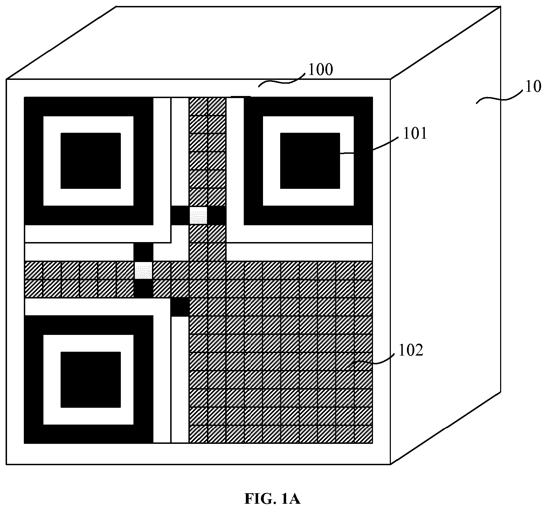

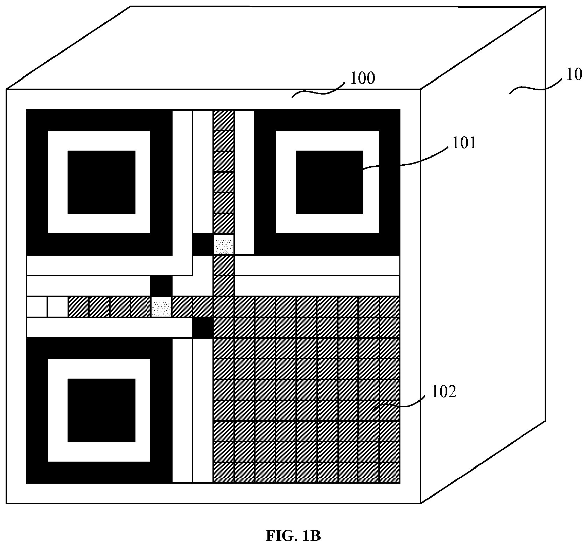

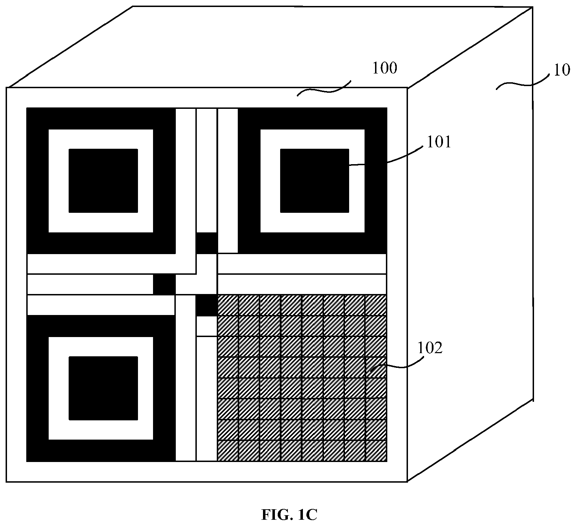

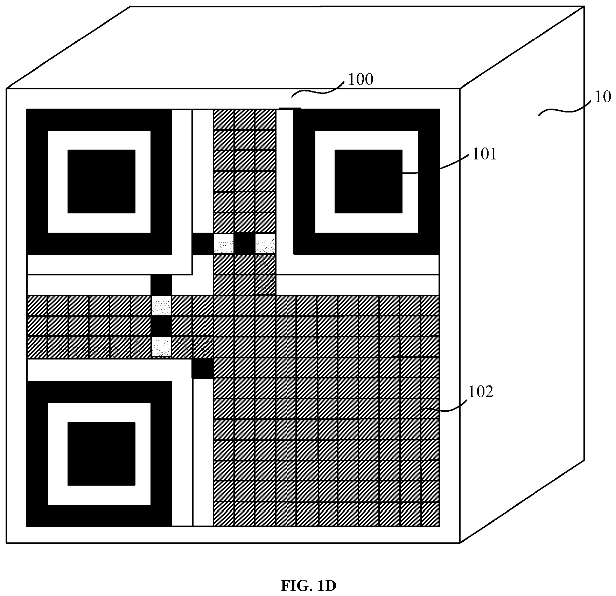

Reference is made to FIG. 1A, FIG. 1B, FIG. 1C, and FIG. 1D, which each show a schematic structural diagram of an object on which a two-dimensional code is provided according to an embodiment of this application. A two-dimensional code 100 is provided on an object 10. The two-dimensional code 100 includes a square module array consisting of m*m modules. The square module array includes a location detection pattern 101 and a data information pattern 102.

The object 10 may be a beverage bottle cap, a button, a knob, or the like. A form of the object 10 is not limited in this embodiment.

A value of m is less than 21, and is not limited in this embodiment.

In an implementation, m=19, as shown in FIG. 1A. In an implementation, m=17, as shown in FIG. 1B. In an implementation, m=18, as shown in FIG. 1C. In an implementation, m=20, as shown in FIG. 1D.

The location detection pattern 101 is used for determining a location of the two-dimensional code. In an implementation, the location detection pattern 101 includes three identical location detection patterns. The three location detection patterns are separately distributed at an upper left corner, an upper right corner, and a lower left corner of the two-dimensional code.

The data information pattern 102 is used for carrying data. The data information pattern 102 is shown by a shadow area indicated by oblique line boxes in FIG. 1A to FIG. 1D.

Each of the modules is a first-type module or a second-type module, and a color attribute of the first-type module is different from a color attribute of the second-type module. The module is a minimal identification unit in a two-dimensional code. In an implementation, the module is a square.

In an implementation, the first-type module is a dark-colored module, indicating a binary number 1, and the second-type module is a light-colored module, indicating a binary number 0.

Generally, the color attribute of the first-type module is black, and the color attribute of the second-type module is white. The color attribute of the module is not limited in this embodiment. It should be noted that in other embodiments, the square module array may also be referred to as a square array, a matrix array, a square matrix, or a square matrix array.

In conclusion, a miniature two-dimensional code is provided on the object provided in this embodiment. The miniature two-dimensional code includes a square module array consisting of m*m modules, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

It should be noted that a type of the object is not limited in this embodiment. The miniature two-dimensional code may be provided at a visible location on the object by means of ink-jet printing, pasting, laser printing, electronic display, or the like. The manner in which the miniature two-dimensional code is provided on the object is not limited in this embodiment.

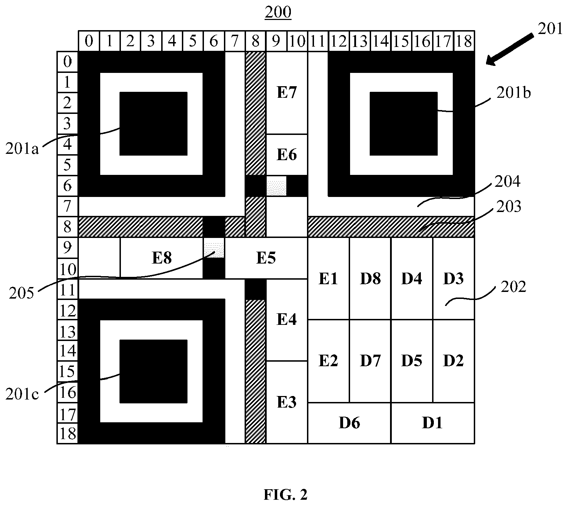

To describe the structure of the two-dimensional code in more detail, the following embodiments are all described by using the embodiments in FIG. 2 to FIG. 4 and using a two-dimensional code including a square module array consisting of 19*19 modules as an example.

Reference is made to FIG. 2, which is a schematic structural diagram of a two-dimensional code according to an embodiment of this application. The two-dimensional code includes a square module array 200 consisting of m*m modules. The square module array 200 includes: a location detection pattern 201, a data information pattern 202, format information 203, and a location detection pattern separator 204.

The location detection pattern 201 includes: a first location detection pattern 201a, a second location detection pattern 201b, and a third location detection pattern 201c.

It is assumed that the square module array 200 includes 19 rows, numbered 0 to 18 from top to bottom; and includes 19 columns, numbered 0 to 18 from left to right, as shown in FIG. 2. It should be noted that the numbers in FIG. 2 are used merely for assisting understanding, and are not included in the two-dimensional code.

The first location detection pattern 201a occupies 7*7 modules in the square module array 200, whose row coordinates range from 0 to 6 and whose column coordinates range from 0 to 6.

The second location detection pattern 201b occupies 7*7 modules in the square module array 200, whose row coordinates range from 0 to 6 and whose column coordinates range from 12 to 18.

The third location detection pattern 201c occupies 7*7 modules in the square module array 200, whose row coordinates range from 12 to 18 and whose column coordinates range from 0 to 6.

In an implementation, each location detection pattern 201 is regarded as including three overlapping concentric square arrays. Each module in the square module array consisting of 7*7 modules located at the lowest layer is a first-type module, that is, a dark-colored module. Each module in the square module array consisting of 5*5 modules located at the middle layer is a second -type module, that is, a light-colored module. Each module in the square module array consisting of 3*3 modules located at the uppermost layer is a first-type module, that is, a dark-colored module.

In an implementation, each location detection pattern 201 is regarded as including a square box of 7*7 modules, a square box of 5*5 modules, and a square module array of 3*3 modules. The square boxes and the square module array are nested, adjacent and do not overlap one another. Each module in the square box of 7*7 modules is a first-type module, that is, a dark-colored module. Each module in the square box of 5*5 modules is a second -type module, that is, a light-colored module. Each module in the square module array of 3*3 modules is a first-type module, that is, a dark-colored module.

The data information pattern 202 is used for carrying data. In an implementation, the data information pattern 202 carries 16 data blocks. Each data block occupies eight modules in the square module array 200, and at least one data block occupies eight adjacent modules in the square module array 200. For example, a data block D1 in the figure occupies eight adjacent modules located at a lower right corner.

In an implementation, the data information pattern 202 includes a first-type module and/or a second-type module. Different combinations of the first-type module and/or the second-type module indicate different data information.

In an implementation, in a case that an automatic error correction function is provided, data carried in the data information pattern 202 includes: a data codeword and an error correction codeword corresponding to the data. The error correction codeword is used for implementing automatic error correction of the data.

The square module array 200 further includes format information 203 indicating format information of the data during encoding. In an implementation, the format information 203 occupies thirty modules in the square module array 200, which are separately: six modules whose row coordinates are 8 and whose column coordinates range from 0 to 5, two modules whose row coordinates are 8 and whose column coordinates range from 7 to 8, six modules whose column coordinates are 8 and whose row coordinates range from 0 to 5, one module whose column coordinate is 8 and whose row coordinate is 7, eight modules whose row coordinates are 8 and whose column coordinates range from 11 to 18, and seven modules whose column coordinates are 8 and whose row coordinates range from 12 to 18, as shown by oblique line shadow areas in FIG. 2.

In an implementation, the format information 203 includes a first-type module and/or a second-type module. Different combinations of the first-type module and/or the second-type module indicate different format information.

In an implementation, the format information 203 carries an error correction level corresponding to the error correction codeword. The error correction level includes: an error correction level L, an error correction level I, an error correction level Q, and an error correction level H.

The error correction level L means that approximate 7% of data can be corrected. The error correction level I means that approximate 15% of data can be corrected. The error correction level Q means that approximate 25% of data can be corrected. The error correction level H means that approximate 30% of data can be corrected. The data may also be referred to as a character code.

In an implementation, in the error correction level L, the error correction codeword occupies five data blocks; in the error correction level I, the error correction codeword occupies six data blocks; in the error correction level Q, the error correction codeword occupies seven data blocks; and in the error correction level H, the error correction codeword occupies eight data blocks.

In an implementation, in the error correction level H, the data may occupy nine data blocks at most; in the error correction level Q, the data may occupy ten data blocks at most; in the error correction level I, the data may occupy twelve data blocks at most; and in the error correction level L, the data may occupy thirteen data blocks at most.

In this embodiment, the error correction level H is used as an example in FIG. 2. The data carried by the data information pattern 202 occupies sixteen data blocks. Data occupies eight data blocks, and an error correction codeword corresponding to the data occupies eight data blocks.

In an implementation, the data occupies eight first data blocks D1, D2, D3, D4, D5, D6, D7, and D8. The data block D1 occupies eight modules whose row coordinates range from 17 to 18 and whose column coordinates range from 15 to 18. The data block D2 occupies eight modules whose row coordinates range from 13 to 16 and whose column coordinates range from 17 to 18. The data block D3 occupies eight modules whose row coordinates range from 9 to 12 and whose column coordinates range from 17 to 18. The data block D4 occupies eight modules whose row coordinates range from 9 to 12 and whose column coordinates range from 15 to 16. The data block D5 occupies eight modules whose row coordinates range from 13 to 16 and whose column coordinates range from 15 to 16. The data block D6 occupies eight modules whose row coordinates range from 17 to 18 and whose column coordinates range from 11 to 14. The data block D7 occupies eight modules whose row coordinates range from 13 to 16 and whose column coordinates range from 13 to 14. The data block D8 occupies eight modules whose row coordinates range from 9 to 12 and whose column coordinates range from 13 to 14.

In an implementation, the error correction codeword occupies eight second data blocks E1, E2, E3, E4, E5, E6, E7, and E8. The data block E1 occupies eight modules whose row coordinates range from 9 to 12 and whose column coordinates range from 11 to 12. The data block E2 occupies eight modules whose row coordinates range from 13 to 16 and whose column coordinates range from 11 to 12. The data block E3 occupies eight modules whose row coordinates range from 15 to 18 and whose column coordinates range from 9 to 10. The data block E4 occupies eight modules whose row coordinates range from 11 to 14 and whose column coordinates range from 9 to 10. The data block E5 occupies eight modules whose row coordinates range from 9 to 10 and whose column coordinates range from 7 to 10. The data block E6 occupies four modules whose row coordinates range from 4 to 5 and whose column coordinates range from 9 to 10 and four modules whose row coordinates range from 7 to 8 and whose column coordinates range from 9 to 10. The data block E7 occupies eight modules whose row coordinates range from 0 to 3 and whose column coordinates range from 9 to 10. The data block E8 occupies eight modules whose row coordinates range from 9 to 10 and whose column coordinates range from 2 to 5.

In an implementation, the square module array 200 further includes a location detection pattern separator 204. The location detection pattern separator 204 is used for separating the location detection pattern 201 from the format information 203, or separating the location detection pattern 201 from the data information pattern 202. The location detection pattern separator 204 is usually a second-type module, that is, a light-colored module.

In an implementation, the location detection pattern separator 204 occupies forty-five modules in the square module array 200, which are separately: eight modules whose row coordinates are 7 and whose column coordinates range from 0 to 7, seven modules whose row coordinates range from 0 to 6 and whose column coordinates are 7, eight modules whose row coordinates are 7 and whose column coordinates range from 11 to 18, seven modules whose row coordinates range from 0 to 6 and whose column coordinates are 11, eight modules whose row coordinates are 11 and whose column coordinates range from 0 to 7, and seven modules whose row coordinates range from 12 to 18 and whose column coordinates are 7, as shown in FIG. 2.

In an implementation, the square module array 200 further includes a positioning pattern 205. The positioning pattern 205 is used for preventing the two-dimensional code from rotating or being inverted. The positioning pattern 205 occupies six modules, which are separately: a dark-colored (black) module located in the 6^{th} row and the 8^{th} column, a light-colored (white) module located in the 6^{th} row and the 9^{th} column, a dark-colored (black) module located in the 6^{th} row and the 10^{th} column, a dark-colored (black) module located in the 8^{th} row and the 6^{th} column, a light-colored (white) module located in the 9^{th} row and the 6^{th} column, and a dark-colored (black) module located in the 10^{th} row and the 6^{th} column.

In this embodiment, sixteen data blocks are divided into eight first data blocks and eight second data blocks according to data codewords and error correction codewords, for example. The data blocks may be divided according to a data codeword and an error correction codeword corresponding to data in other manners in this embodiment.

There are two main ways of printing a two-dimensional code: ink-jet printing and laser printing. In some scenarios, a two-dimensional code needs to be printed on a small area, for example, an inner side of a beverage bottle cap. In this case, the laser printing is preferentially used. Because a two-dimensional code includes a dark-colored (black) module and a light-colored (white) module, efficiency of the laser printing is inversely proportional to the number of light-colored modules. The two-dimensional code shown in FIG. 2 includes 230 light-colored modules on average. Because there are many light-colored modules, production efficiency of printing is reduced.

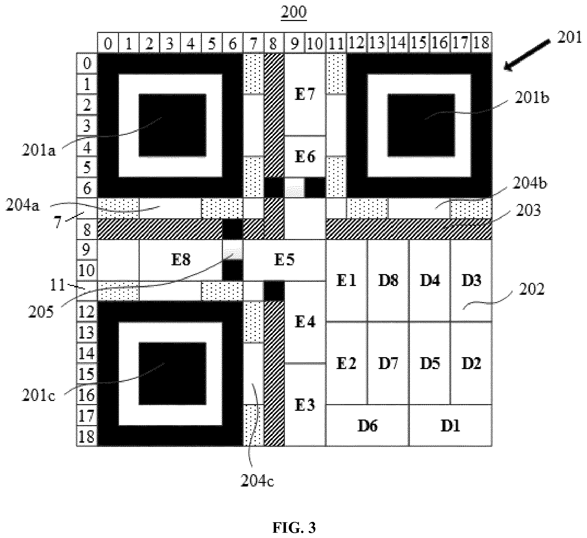

Referring to FIG. 3, based on the embodiment shown in FIG. 2, light-colored modules in the location detection pattern separator 204 are reduced.

In the embodiment shown in FIG. 3, at least one of i (=45) modules occupied by the location detection pattern separator 204 in the square module array 200 is a first-type module, that is, a dark-colored module.

In an implementation, the location detection pattern separator 204 includes a first location detection pattern separator 204a, a second location detection pattern separator 204b, and a third location detection pattern separator 204c.

The first location detection pattern separator 204a occupies fifteen modules in the square module array 200, which are separately: eight modules whose row coordinates range from 0 to 7 and whose column coordinates are 7, and seven modules whose row coordinates are 7 and whose column coordinates range from 0 to 6.

The second location detection pattern separator 204b occupies fifteen modules in the square module array 200, which are separately: eight modules whose row coordinates range from 0 to 7 and whose column coordinates are 11, and seven modules whose row coordinates are 7 and whose column coordinates range from 12 to 18.

The third location detection pattern separator 204c occupies fifteen modules in the square module array 200, which are separately: eight modules whose row coordinates range from 11 to 18 and whose column coordinates are 7, and seven modules whose row coordinates are 11 and whose column coordinates range from 0 to 6.

In the location detection pattern separator, at least one of twenty-four modules located in the 0^{th} row and the 7^{th} column, the 0^{th} row and the 11^{th} column, the 1^{st} row and the 7^{th} column, the 1^{st} row and the 11^{th} column, the 5^{th} row and the 7^{th} column, the 5^{th} row and the 11^{th} column, the 6^{th} row and the 7^{th} column, the 6^{th} row and the 11^{th} column, the 7^{th} row and the 0^{th} column, the 7^{th} row and the 1^{st} column, the 7^{th} row and the 5^{th} column, the 7^{th} row and the 6^{th} column, the 7^{th} row and the 12^{th} column, the 7^{th} row and the 13^{th} column, the 7^{th} row and the 17^{th} column, the 7^{th} row and the 18^{th} column, the 1 1^{th} row and the 0^{th} column, the 1 1^{th} row and the 1^{st} column, the 11^{th} row and the 5^{th} column, the 11^{th} row and the 6^{th} column, the 12^{th} row and the 7^{th} column, the 13^{th} row and the 7^{th} column, the 17^{th} row and the 7^{th} column, the 18^{th} row and the 7^{th} column is a first-type module, that is, a dark-colored (black) module.

In conclusion, in this embodiment, at least one of i modules occupied by the location detection pattern separator is set to be a dark-colored module. The number of light-colored modules is reduced, thereby improving two-dimensional code printing and production efficiency without affecting normal identification of the two-dimensional code.

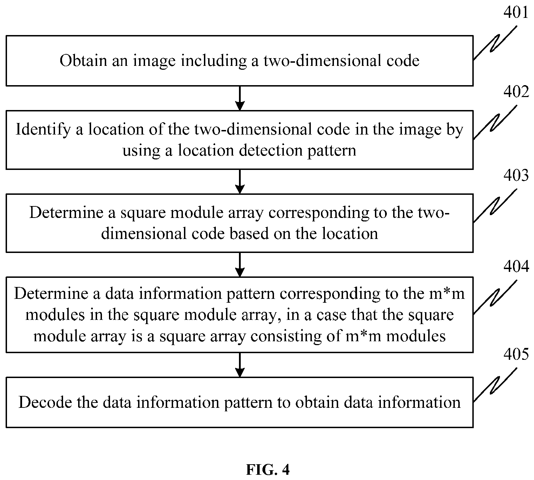

Reference is made to FIG. 4, which is a flowchart of a two-dimensional code identification method according to an embodiment of this application. The two-dimensional code identification method may be used to identify the two-dimensional code shown in FIG. 1 to FIG. 3. The two-dimensional code identification method may be performed by a terminal or a server. The two-dimensional code identification method includes the following steps 401 to 405.

In step 401, an image including a two-dimensional code is obtained.

In step 402, a location of the two-dimensional code in the image is identified by using a location detection pattern.

In Step 403, based on the location, a square module array corresponding to the two-dimensional code is determined.

In step 404, in a case that the square module array is a square module array consisting of m*m modules, a data information pattern corresponding to the m*m modules is determined in the square module array, where m is equal to 17, 18, 19 or 20.

In step 405, the data information pattern is decoded to obtain data.

Each of the modules is a first-type module or a second-type module, and a color attribute of the first-type module is different from a color attribute of the second-type module.

In an implementation, in addition to the square module array consisting of m*m modules, the two-dimensional code may further include a text, an icon, and a video. The text, icon, and video cover a partial area (for example, a middle area) in the two-dimensional code. Visible content of the two-dimensional code is not limited in this embodiment.

In conclusion, according to the two-dimensional code identification method provided in this embodiment, in a case that the square module array is a square module array consisting of m*m modules, a data information pattern corresponding to the m*m modules is determined in the square module array, where m is equal to 17, 18, 19 or 20. Even if printed in a small area, for example, a miniature area whose side length ranges from 0.5 cm to 0.7 cm, the two-dimensional code can still be normally identified, and is suitable to be applied in a small area scenario such as an inner side of a bottle cap or a corner of an object.

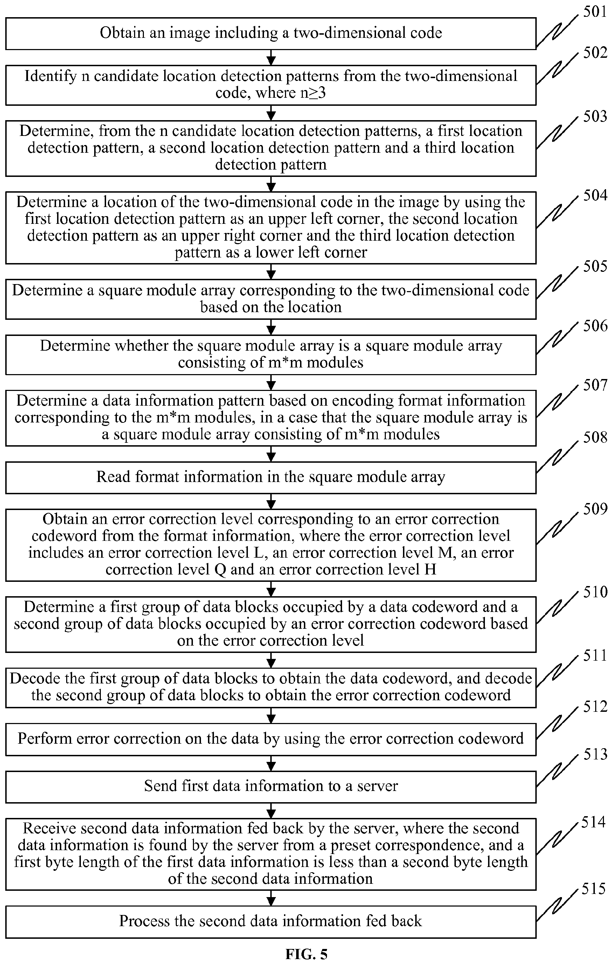

Reference is made to FIG. 5, which is a flowchart of a two-dimensional code identification method according to another embodiment of this application. This embodiment is based on the embodiment shown in FIG. 4. The two-dimensional code identification method includes the following steps 501 to 515.

In step 501, an image including a two-dimensional code is obtained.

A method of obtaining, by a terminal, an image including a two-dimensional code includes but is not limited to: placing an image including a two-dimensional code in an identification frame, selecting an image including a two-dimensional code from an album, or long pressing an image including a two-dimensional code.

In an implementation, after obtaining the image including the two-dimensional code, the terminal performs binarization on the image. Binarization is an image processing manner, in which a pixel whose gray scale is greater than a threshold is changed into a black pixel, and a pixel whose gray scale is less than the threshold is changed into a white pixel. In an image on which binarization has been performed, the first-type modules in the square module array are unitized as black modules, and the second-type modules are unitized as white modules.

In step 502, n candidate location detection patterns are identified from the two-dimensional code, where n≥3.

In an implementation, the terminal scans the image row by row from top to bottom, or scans the image column by column from left to right.

When seven scanned adjacent modules in a same row (or a same column) are sequentially: a black module, a white module, a black module, a black module, a black module, a white module, and a black module, and a number ratio for the black module to the white module to the black module to the white module to the black module is 1:1:3:1:1, the black module whose number ratio is 3 is used to position a candidate location detection pattern.

After all rows in the image are scanned, n candidate location detection patterns are obtained.

In step 503, a first location detection pattern, a second location detection pattern, and a third location detection pattern are determined from the n candidate location detection patterns.

In an implementation, the terminal ranks the candidate location detection patterns in a descending order of matching degrees between the candidate location detection patterns and a reference location detection pattern; and determines, from top three of the location detection patterns, the first location detection pattern, the second location detection pattern, and the third location detection pattern. The matching degree may be a matching degree between the candidate location detection pattern and a standard location detection pattern, and is determined by the terminal during scanning.

In another implementation, the terminal connects centers of any three of the candidate location detection patterns to obtain several triangles; determines a triangle having a highest similarity with an isosceles right triangle and whose longest edge is the longest; and determines, from the three candidate location detection patterns corresponding to the determined triangle, the first location detection pattern, the second location detection pattern, and the third location detection pattern.

In step 504, a location of the two-dimensional code in the image is determined by using the first location detection pattern as an upper left corner, the second location detection pattern as an upper right corner, and the third location detection pattern as a lower left corner.

The two-dimensional code in the image may be rotated, inclined, amplified, shrunk, distorted, or inverted. Therefore, the terminal can position the two-dimensional code in the image by using the first location detection pattern, the second location detection pattern, and the third location detection pattern.

In step 505, based on the location, a square module array corresponding to the two-dimensional code is determined.

In an implementation, perspective transformation is performed according to the location of the two-dimensional code in the image. The two-dimensional code is projected to a matrix with a fixed size, to obtain a front view of the square module array corresponding to the two-dimensional code.

In step 506, it is determined whether the square module array is a square module array consisting of m^{∗}m modules, where m is equal to 17, 18, 19 or 20.

In an implementation, it is determined whether the square module array is a square module array consisting of m*m modules, based on a distance between the first location detection pattern and the second location detection pattern, and a width of the first location detection pattern or the second location detection pattern.

Because the width of the first location detection pattern or the second location detection pattern covers seven modules, the terminal can determine a type of the square module array based on the distance between the first location detection pattern and the second location detection pattern, and the width of the first location detection pattern or the second location detection pattern.

In a case that the distance between the first location detection pattern and the second location detection pattern covers five modules, and the width of the first location detection pattern or the second location detection pattern covers seven module, it is determined that the square module array is a square module array consisting of m*m modules.

In another implementation, it is determined whether the square module array is a square module array consisting of m*m modules, based on a distance between the first location detection pattern and the third location detection pattern, and a width of the first location detection pattern or the third location detection pattern.

In a case that the distance between the first location detection pattern and the third location detection pattern covers five modules, and the width of the first location detection pattern or the third location detection pattern covers seven module, it is determined that the square module array is a square module array consisting of m*m modules.

In a case that the square module array is a square module array consisting of 21*21 modules, 25*25 modules, or 29*29 modules, identification is performed according to identification modes corresponding to versions 1 to 40 of the two-dimensional code.

In step 507, in a case that the square module array is a square module array consisting of m*m modules, a data information pattern is determined based on encoding format information corresponding to the m*m modules.

In an implementation, the terminal pre-stores encoding format information of a square module array consisting of m*m modules. In a case that the square module array is a square module array consisting of m*m modules, a data information pattern is determined by using encoding format information corresponding to the m*m modules.

In step 508, format information in the square module array is read.

In step 509, an error correction level corresponding to an error correction codeword is obtained from the format information. The error correction level includes: an error correction level L, an error correction level I, an error correction level Q, and an error correction level H.

In step 510, according to the error correction level, a first group of data blocks occupied by a data codeword and a second group of data blocks occupied by an error correction codeword in the data information pattern are determined.

In step 511, the first group of data blocks are decoded to obtain the data codeword, and the second group of data blocks are decoded to obtain the error correction codeword.

In step 512, error correction is performed on the data corresponding to the data codeword by using the error correction codeword.

In an implementation, in a case that the square module array corresponding to the two-dimensional code includes an incomplete part, or the square module array includes an icon, a text, or other interference information, error correction may be performed on the data by using the error correction codeword.

It should be noted that the error correction codeword may be used to correct two types of errors: a read rejection error and a replacement error. The read rejection error refers to data that is not scanned or cannot be decoded in a case that a location of erroneous data is known. The replacement error refers to data that is incorrectly decoded in a case that a location of erroneous data is unknown. For example, when a dark-colored module changes into a light-colored module, or a light-colored module changes into a dark-colored module due to a bug, that is, when data is incorrectly decoded into another piece of data that is seemingly valid, this type of data replacement error needs to be corrected by using two error correction codewords.

In an implementation, the data obtained by decoding the two-dimensional code is first data information. The first data information is an identifier (or an index) of the second data information. The second data information is information having practical meaning. For example, the second data information includes at least one of: a uniform resource locator (URL), image information, audio information, text information, video information, and a lottery result.

The first data information has a first byte length, the second data information has a second byte length, and the first byte length is less than the second byte length. Exemplarily, the first byte length is 72, that is, nine characters. The second byte length is not limited.

In step 513, first data information is sent to a server.

When second data information corresponding to the first data information is to be obtained, the first data information is sent to the server.

The server stores a preset correspondence between the first data information and the second data information.

The preset correspondence may be pre-stored. For example, the first data information is information obtained by performing hash calculation on the second data information. Then, the server stores the first data information and the second data information in the preset correspondence. In another example, the server is provided with a first data information repository. The first data information repository includes unused first data information. When there is second data information, the server allocates, from the first data information repository, the first data information corresponding to the second data information.

The preset correspondence may also be calculated in real time according to an algorithm. For example, the server calculates in real time, according to a lottery algorithm, the second data information corresponding to the first data information. The second data information is a lottery result page corresponding to the lottery result.

The server receives the sent first data information, searches the preset correspondence for the second data information corresponding to the first data information, and returns the second data information.

In step 514, second data information fed back by the server is received. The second data information is found by the server from the preset correspondence, and a first byte length of the first data information is less than a second byte length of the second data information.

In step 515, the second data information fed back is processed.

For example, in a case that the second data information is a URL, a web page corresponding to the URL is jumped to. In a case that the second data information is image information, content corresponding to the image information is displayed. In a case that the second data information is audio information, content corresponding to the audio information is played. In a case that the second data information is text information, content corresponding to the text information is displayed. In a case that the second data information is video information, content corresponding to the video information is played. In a case that the second data information is a lottery result, the lottery result is displayed.

It should be noted that the foregoing steps are performed by the terminal.

The foregoing steps may also be performed by the server, which is not limited in this embodiment.

In conclusion, according to the two-dimensional code identification method provided in this embodiment, in a case that the square module array is a square module array consisting of m*m modules, a data information pattern corresponding to the m*m modules is determined in the square module array, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

In this embodiment, the first data information corresponding to the second data information is further generated, and a first byte length of the first data information is less than a second byte length of the second data information. In this case, even if the second byte length of the second data information is long, the two-dimensional code can still be generated. The two-dimensional code has a much smaller area than that of a regular two-dimensional code, but has a use range that is not significantly different from that of the regular two-dimensional code.

According to the two-dimensional code identification method provided in this embodiment, a terminal connects centers of any three candidate location detection patterns to obtain several triangles; determines a triangle having a highest similarity with an isosceles right triangle and whose longest edge is the longest; and determines, from the three candidate location detection patterns corresponding to the determined triangle, a first location detection pattern, a second location detection pattern, and a third location detection pattern. In this way, the feature of forming an isosceles right triangle by three location detection patterns is fully utilized, to accurately determine the three location detection patterns from multiple groups of location detection patterns, thereby improving accuracy of two-dimensional code identification.

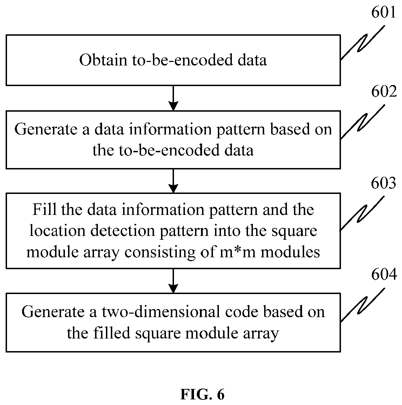

Reference is made to FIG. 6, which is a flowchart of a two-dimensional code generation method according to an embodiment of this application. The two-dimensional code generation method may be performed by a terminal or a server. The two-dimensional code generation method includes the following steps 601 to 604.

In step 601, to-be-encoded data is obtained.

In step 602, a data information pattern is generated based on the to-be-encoded data.

In step 603, the data information pattern and a location detection pattern are filled into a square module array consisting of m^{∗}m modules, where m is equal to 17, 18, 19 or 20.

In step 604, a two-dimensional code is generated based on the filled square module array.

The location detection pattern is used for determining a location of the two-dimensional code, and the data information pattern is used for carrying the data. Each of the modules is a first-type module or a second-type module, and a color attribute of the first-type module is different from a color attribute of the second-type module.

In conclusion, according to the two-dimensional code generation method provided in this embodiment, the two-dimensional code is generated based on the filled square module array. The square module array includes m*m modules, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

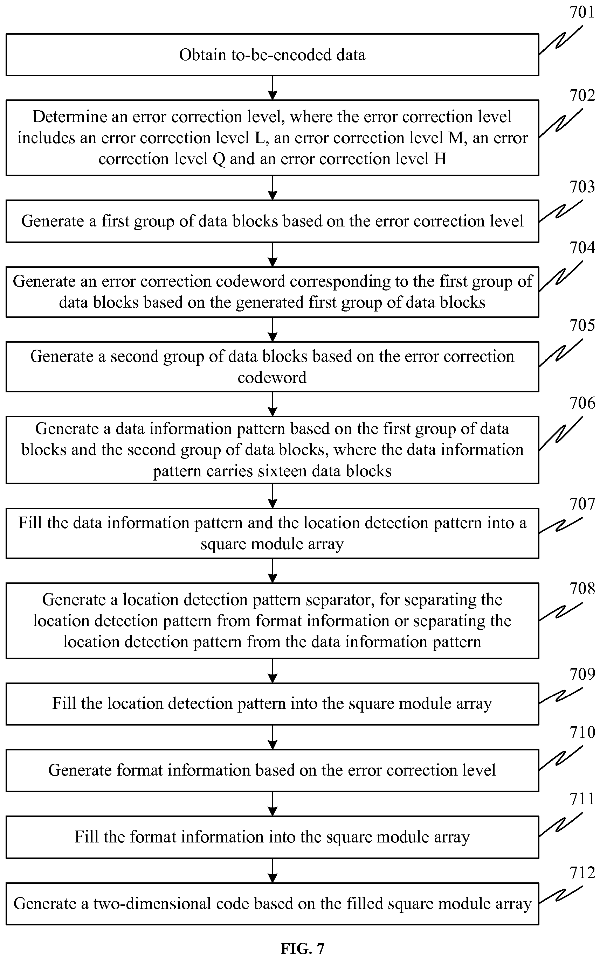

Reference is made to FIG. 7, which is a flowchart of a two-dimensional code generation method according to another embodiment of this application. This embodiment is based on the embodiment shown in FIG. 6. The generation method includes the following steps 701 to 712.

In step 701, to-be-encoded data is obtained.

In an implementation, the server determines a character type of the to-be-encoded data, and encodes the data according to a character set corresponding to the character type.

A coded character set may include digital data, alphabetic-digital data, eight-bit byte data, or a Chinese character.

Using alphabetic- digital data as an example, the alphabetic- digital data includes 45 characters: numbers 0 to 9, capital letters A to Z, and nine other characters.

**Table 1**

| Character | Value | Character | Value | Character | Value | Character | Value | Character | Value | Character | Value | Character | Value | Character | Value |
|---|---|---|---|---|---|---|---|---|---|---|---|---|---|---|---|
| 0 | 0 | 6 | 6 | C | 12 | I | 18 | O | 24 | U | 30 | SP | 36 | . | 42 |
| 1 | 1 | 7 | 7 | D | 13 | J | 19 | P | 25 | V | 31 | $ | 37 | / | 43 |
| 2 | 2 | 8 | 8 | E | 14 | K | 20 | Q | 26 | W | 32 | % | 38 | . | 44 |
| 3 | 3 | 9 | 9 | F | 15 | L | 21 | R | 27 | X | 33 | * | 39 | | |
| 4 | 4 | A | 10 | G | 16 | M | 22 | S | 28 | Y | 34 | + | 40 | | |
| 5 | 5 | B | 11 | H | 17 | N | 23 | T | 29 | Z | 35 | - | 41 | | |

In step 702, an error correction level is determined. The error correction level includes: an error correction level L, an error correction level I, an error correction level Q, and an error correction level H.

In an implementation, the server reads a default error correction level, and determines the default error correction level as an error correction level that needs to be used currently.

In an implementation, the server stores a correspondence between data types and error correction levels. For example, in a case that the data type is a website, a first error correction level is used. In a case that the data type is an avatar, a second error correction level is used. The server determines a corresponding error correction level from the correspondence based on a data type of data encoded currently.

In step 703, a first group of data blocks are generated by using a data codeword based on the error correction level.

In an implementation, after determining the error correction level, the server performs data encoding on the data codeword according to a character set. The data encoding includes converting a data codeword into a binary bit stream, and divide the generated binary bit stream into several data blocks. Each of the data blocks occupies 8 bits.

In step 704, based on the generated first group of data blocks, an error correction codeword corresponding to the first group of data blocks is generated.

In an implementation, the error correction algorithm is Reed-Solomon error correction algorithm.

In step 705, a second group of data blocks are generated based on the error correction codeword.

In step 706, a data information pattern is generated based on the first group of data blocks and the second group of data blocks. The data information pattern carries sixteen data blocks.

For example, in the error correction level H, data carried by the data information pattern occupies sixteen data blocks, the first group of data blocks includes eight data blocks, and the second group of data blocks includes eight data blocks. Each data block occupies eight modules in the square module array, and at least one data block occupies eight adjacent modules in the square module array.

It should be noted that in the square module array consisting of m*m modules, there are four remaining bits. The remaining bit indicates the number of modules configured to fill up the data information pattern in a final binary bit stream.

In step 707, the data information pattern and a location detection pattern are filled into the square module array.

In an implementation, the server includes a blank square module array consisting of m*m modules. The server fills the data information pattern and the location detection pattern into corresponding locations in the blank square module array.

In step 708, a location detection pattern separator is generated. The location detection pattern separator is used for separating the location detection pattern from format information, or separating the location detection pattern from the data information pattern.

In an implementation, the location detection pattern separator occupies i modules in the square module array, and at least one of the i modules is the first-type module, that is, a dark-colored module.

In step 709, the location detection pattern separator is filled into the square module array.

In an implementation, in the location detection pattern separator, at least one of twenty-four modules located in the 0^{th} row and the 7^{th} column, the 0^{th} row and the 17^{th} column, the 1^{st} row and the 7^{th} column, the 1^{st} row and the 11^{th} column, the 5^{th} row and the 7^{th} column, the 5^{th} row and the 11^{th} column, the 6^{th} row and the 7^{th} column, the 6^{th} row and the 11^{th} column, the 7^{th} row and the 0^{th} column, the 7^{th} row and the 1^{st} column, the 7^{th} row and the 5^{th} column, the 7^{th} row and the 6^{th} column, the 7^{th} row and the 12^{th} column, the 7^{th} row and the 13^{th} column, the 7^{th} row and the 17^{th} column, the 7^{th} row and the 18^{th} column, the 1 1^{th} row and the 0^{th} column, the 1 1^{th} row and the 1^{st} column, the 1 1^{th} row and the 5^{th} column, the 11^{th} row and the 6^{th} column, the 12^{th} row and the 7^{th} column, the 13^{th} row and the 7^{th} column, the 17^{th} row and the 7^{th} column, the 18^{th} row and the 7^{th} column is the first-type module, that is, a dark-colored (black) module, as shown in the embodiment in FIG. 3.

In step 710, the format information is generated based on the error correction level.

In step 711, the format information is filled into the square module array.

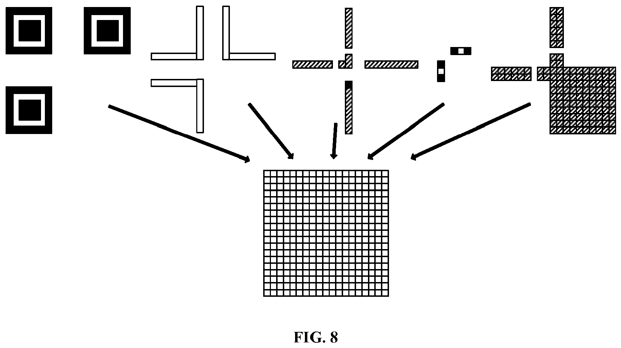

It should be noted that step 707, step 709, and step 711 may be performed at the same time or in a sequential order. The order in which the three steps are performed is not limited in this embodiment of this application. With reference to FIG. 8, the data information pattern, the location detection pattern, the location detection pattern separator, and the format information are filled into the square module array.

In step 712, a two-dimensional code is generated based on the filled square module array.

In conclusion, according to the two-dimensional code generation method provided in this embodiment, the two-dimensional code is generated based on the filled square module array. The square module array includes m*m modules, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

In this embodiment, the location detection pattern separator occupies i modules in the square module array, and at least one of the i modules is the first-type module, so that the number of light-colored modules is reduced, thereby improving two-dimensional code printing and production efficiency without affecting normal identification of the two-dimensional code.

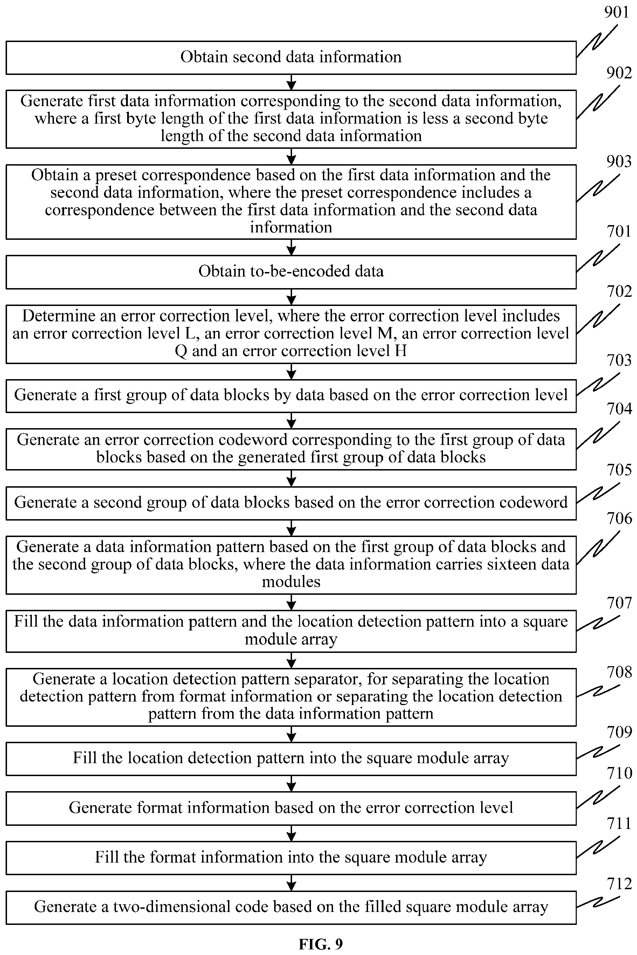

Reference is made to FIG. 9, which is a flowchart of a two-dimensional code generation method according to still another embodiment of this application. This embodiment is based on the embodiment shown in FIG. 7. Before step 701, the generation method further includes steps 901 to 903.

In step 901, second data information is obtained.

In an implementation, the second data information is information having practical meaning. The second data information includes at least one of: a URL, image information, audio information, text information, video information, and a lottery result.

In step 902, first data information corresponding to the second data information is generated, and a first byte length of the first data information is less than a second byte length of the second data information.

The first data information is an identifier (or an index) of the second data information. The second data information is information having practical meaning. The first data information has a first byte length, the second data information has a second byte length, and the first byte length is less than the second byte length. Exemplarily, the first byte length is 72, that is, nine characters. The second byte length is not limited.

In an implementation, the server performs hash calculation on the second data information to obtain the first data information. That is, the first data information is a hash value of the second data information.

For example, if the second data information is "http://iteycunl.coi/topic/577820", and the first data information obtained by hash calculation is "652384914".

In an implementation, a first data information repository is provided in the server, and the first data information repository includes unused first data information. When there is second data information, the server allocates, from the first data information repository, first data information corresponding to the second data information.

In another example, the first data information is an information identifier, and the second data information is a URL. An information identifier library (first data information repository) is provided in the server. The information identifier library includes 1000 unused information identifiers. When obtaining a new URL, the server allocates, from the information identifier library, an information identifier corresponding to the URL.

In step 903, a preset correspondence is obtained based on the first data information and the second data information. The preset correspondence includes a correspondence between the first data information and the second data information.

The server stores the first data information and the second data information in the preset correspondence.

The server may determine the first data information as the to-be-encoded data, and the method proceeds to step 701.

In conclusion, according to the two-dimensional code generation method provided in this embodiment, a two-dimensional code is generated based on the filled square module array. The square module array includes m*m modules, where m is equal to 17, 18, 19 or 20. Even if printed in a miniature area whose side length ranges from 0.5 cm to 0.7 cm, the two-dimensional code can still be normally identified, and is suitable to applied in a small area scenario such as an inner side of a bottle cap or a corner of an object.

In this embodiment, the location detection pattern separator occupies i modules in the square module array, and at least one of the i modules is the first-type module, so that the number of light-colored modules is reduced, thereby improving two-dimensional code printing and production efficiency without affecting normal identification of the two-dimensional code.

In this embodiment, first data information corresponding to second data information is further generated, and a first byte length of the first data information is less than a second byte length of the second data information. Even if the second byte length of the second data information is long, the two-dimensional code can still be generated. The two-dimensional code has a much smaller area than that of a regular two-dimensional code, but has a use range that is not significantly different from that of the regular two-dimensional code.

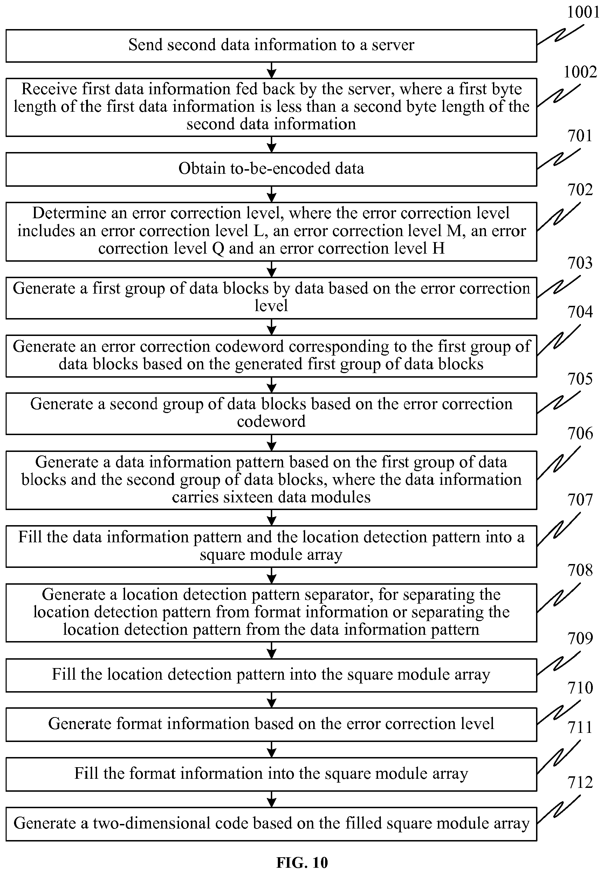

It should be noted that the foregoing embodiment is described by using an example in which the foregoing steps are performed by the server. In still another possible embodiment, the foregoing steps are performed by a terminal. In this case, step 901, step 902, and step 903 may be replaced by step 1001 and step 1002, as shown in FIG. 10.

In step 1001, second data information is sent to a server.

In an implementation, the second data information is information having practical meaning. The second data information includes at least one of: a URL, image information, audio information, text information, video information, and a lottery result.

In step 1002, first data information fed back by the server is received, and a first byte length of the first data information is less than a second byte length of the second data information.

The first data information may be an identifier (or an index) of the second data information. The second data information is information having practical meaning. The first data information has a first byte length, the second data information has a second byte length, and the first byte length is less than the second byte length. Exemplarily, the first byte length is 72, that is, nine characters. The second byte length is not limited.

In an implementation, the server performs hash calculation on the second data information to obtain the first data information. That is, the first data information is a hash value of the second data information.

For example, if the second data information is "http://iteycunl.coi/topic/577820", first data information obtained by hash calculation is "652384914".

In an implementation, a first data information repository is provided in the server, and the first data information repository includes unused first data information. When there is second data information, the server allocates, from the first data information repository, first data information corresponding to the second data information.

In another example, the first data information is an information identifier, and the second data information is a URL. An information identifier library (first data information repository) is provided in the server. The information identifier library includes 1000 unused information identifiers. When obtaining a new URL, the server allocates, from the information identifier library, an information identifier corresponding to the URL.

The terminal may determine the first data information as the to-be-encoded data, and the method proceeds to step 701.

In conclusion, according to the two-dimensional code generation method provided in this embodiment, the two-dimensional code is generated based on the filled square module array. The square module array includes m*m modules, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

In this embodiment, the location detection pattern separator occupies i modules in the square module array, and at least one of the i modules is the first-type module, so that the number of light-colored modules is reduced, thereby improving two-dimensional code printing and production efficiency without affecting normal identification of the two-dimensional code.

In this embodiment, first data information fed back by a server is received, where a first byte length of the first data information is less than a second byte length of second data information. In this way, a byte length of to-be-encoded data is reduced without affecting normal identification of the two-dimensional code.

Device embodiments of this application are described hereinafter. For details that are not elaborated in the device embodiments, one may refer to the foregoing method embodiments that are in a one-to-one correspondence with the device embodiments.

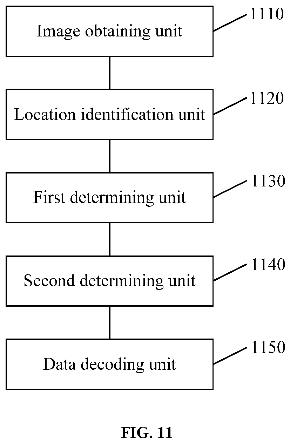

Reference is made to FIG. 11, which is a schematic structural diagram of a two-dimensional code identification device according to an embodiment of this application. The device includes: an image obtaining unit 1110, a location identification unit 1120, a first determining unit 1130, a second determining unit 1140 and a data decoding unit 1150. The image obtaining unit 1110 is configured to obtain an image including a two-dimensional code. The location identification unit 1120 is configured to identify a location of the two-dimensional code in the image by using a location detection pattern. The first determining unit 1130 is configured to determine, based on the location, a square module array corresponding to the two-dimensional code. The second determining unit 1140 is configured to determine, in a case that the square module array is a square module array consisting of m*m modules, a data information pattern corresponding to the m*m modules in the square module array, where m is equal to 17, 18, 19 or 20. The data decoding unit 1150 is configured to decode the data information pattern to obtain data. Each of the modules is a first-type module or a second-type module, and a color attribute of the first-type module is different from a color attribute of the second-type module.

In conclusion, according to the two-dimensional code identification device provided in this embodiment, in a case that the square module array is a square module array consisting of m^{∗}m modules, a data information pattern corresponding to the m*m modules is determined in the square module array, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

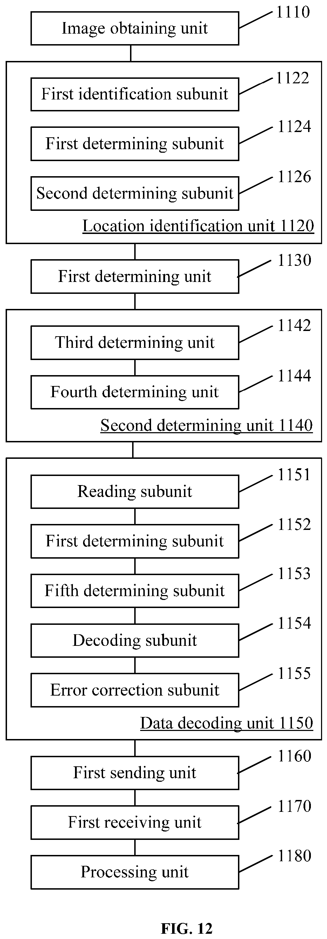

Reference is made to FIG. 12, which is a schematic structural diagram of a two-dimensional code identification device according to another embodiment of this application. This embodiment is based on the embodiment shown in FIG. 11. The location identification unit 1120 includes: a first identification subunit 1122, a first determining subunit 1124, and a second determining subunit 1126.

The first identification subunit 1122 is configured to identify n candidate location detection patterns from the two-dimensional code, where n≥3.

The first determining subunit 1124 is configured to determine, from the n candidate location detection patterns, a first location detection pattern, a second location detection pattern, and a third location detection pattern.

The second determining subunit 1126 is configured to determine a location of the two-dimensional code in the image by using the first location detection pattern as an upper left corner, the second location detection pattern as an upper right corner, and the third location detection pattern as a lower left corner.

The first determining subunit 1124 is configured to: rank the candidate location detection patterns in a descending order of matching degrees between the candidate location detection patterns and a reference location detection pattern; and determine, from top three of the location detection patterns, the first location detection pattern, the second location detection pattern, and the third location detection pattern; or
the first determining subunit 1124 is configured to: connect centers of any three of the candidate location detection patterns to obtain triangles; determine, from the obtained triangles, a triangle having a highest similarity with an isosceles right triangle and whose longest edge is the longest; and determine, from the three candidate location detection patterns corresponding to the determined triangle, the first location detection pattern, the second location detection pattern, and the third location detection pattern.

The second determining unit 1140 includes: a third determining subunit 1142 and a fourth determining subunit 1144.

The third determining subunit 1142 is configured to determine whether the square module array is a square module array consisting of m*m modules, based on a distance between the first location detection pattern and the second location detection pattern, and a width of the first location detection pattern or the second location detection pattern.

The fourth determining subunit 1144 is configured to determine, in a case that the square module array is a square module array consisting of m*m modules, a data information pattern according to encoding format information corresponding to the m*m modules.

The data decoding unit 1150 includes: a reading subunit 1151, an obtaining subunit 1152, a fifth determining subunit 1153, a decoding subunit 1154, and an error correction subunit 1155.

The reading subunit 1151 is configured to read format information in the square module array.

The obtaining subunit 1152 is configured to obtain from the format information, an error correction level corresponding to an error correction codeword. The error correction level includes: an error correction level L, an error correction level I, an error correction level Q, and an error correction level H.

The fifth determining subunit 1153 is configured to determine, based on the error correction level, a first group of data blocks occupied by a data codeword and a second of data blocks occupied by an error correction codeword in the data information pattern.

The decoding subunit 1154 is configured to: decode the first group of data blocks to obtain the data codeword, and decode the second group of data blocks to obtain the error correction codeword.

The error correction subunit 1155 is configured to perform error correction on the data by using the error correction codeword.

The square module array further includes: a location detection pattern separator for separating the location detection pattern from format information, or separating the location detection pattern from the data information pattern. The location detection pattern separator occupies i modules in the square module array, and at least one of the i modules is the first-type module. The format information indicates format information of the data during encoding.

The device further includes: a first sending unit 1160 and a first receiving unit 1170.

The first sending unit 1160 is configured to send the first data information to a server.

The first receiving unit 1170 is configured to receive second data information fed back by the server. The second data information is found by the server from a preset correspondence, and a first byte length of the first data information is less than a second byte length of the second data information.

The second data information includes at least one of: a uniform resource locator URL, image information, audio information, text information, video information, and a lottery result.

In an implementation, the first data information is obtained by performing hash calculation on the second data information.

In an implementation, the first data information is from a first data information repository and allocated for the second data information. The first data information repository includes unused first data information.

The device further includes a processing unit 1180, configured to perform one of the following operations: displaying, in a case that the second data information is image information, content corresponding to the image information; playing, in a case that the second data information is audio information, content corresponding to the audio information; or displaying, in a case that the second data information is text information, content corresponding to the text information; playing, in a case that the second data information is video information, content corresponding to the video information; and displaying, in a case that the second data information is a lottery result, the lottery result.

In conclusion, according to the two-dimensional code identification device provided in this embodiment, in a case that the square module array is a square module array consisting of m*m modules, a data information pattern corresponding to the m*m modules is determined in the square module array, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

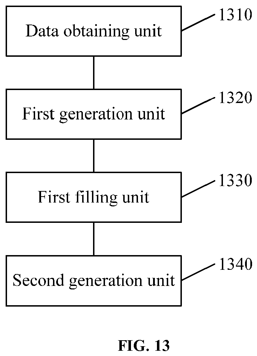

Reference is made to FIG. 13, which is a schematic structural diagram of a two-dimensional code generation device according to an embodiment of this application. The device includes: a data obtaining unit 1310, a first generation unit 1320, a first filling unit 1330 and a second generation unit 1340. The data obtaining unit 1310 is configured to obtain to-be-encoded data. The first generation unit 1320 is configured to generate a data information pattern based on the to-be-encoded data. The first filling unit 1330 is configured to fill the data information pattern and a location detection pattern into a square module array consisting of m*m modules, where m is equal to 17, 18, 19 or 20. The second generation unit 1340 is configured to generate a two-dimensional code based on the filled square module array. The location detection pattern is used for determining a location of the two-dimensional code, and the data information pattern is used for carrying the data. Each of the modules is a first-type module or a second-type module, and a color attribute of the first-type module is different from a color attribute of the second-type module.

In conclusion, according to the two-dimensional code generation device provided in this embodiment, the two-dimensional code is generated based on the filled square module array. The square module array includes m*m modules. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

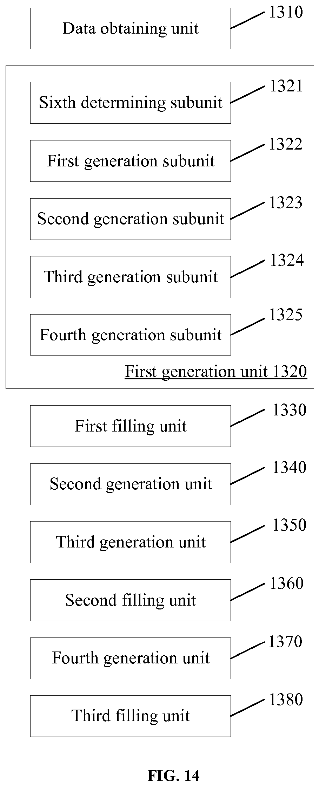

Reference is made to FIG. 14, which is a schematic structural diagram of a two-dimensional code generation device according to another embodiment of this application. This embodiment is based on the embodiment shown in FIG. 13. The first generation unit 1320 includes:a sixth determining subunit 1321, a first generation subunit 1322, a second generation subunit 1323, a third generation subunit 1324, and a fourth generation subunit 1325.

The sixth determining subunit 1321 is configured to determine an error correction level. The error correction level includes: an error correction level L, an error correction level I, an error correction level Q, and an error correction level H.

The first generation subunit 1322 is configured to generate a first group of data blocks by using the data according to the error correction level.

The second generation subunit 1323 is configured to generate, based on the generated first group of data blocks, an error correction codeword corresponding to the first group of data blocks.

The third generation subunit 1324 is configured to generate a second group of data blocks according to the error correction codeword.

The fourth generation subunit 1325 is configured to generate a data information pattern based on the first group of data blocks and the second group of data blocks. The data information pattern carries sixteen data blocks.

The generation device further includes: a third generation unit 1350 and a second filling unit 1360.

The third generation unit 1350 is configured to generate format information based on the error correction level.

The second filling unit 1360 is configured to fill the format information into the square module array.

The generation device further includes: a fourth generation unit 1370 and a third filling unit 1380.

The fourth generation unit 1370 is configured to generate a location detection pattern separator. The location detection pattern separator is used for separating the location detection pattern from the format information, or separating the location detection pattern from the data information pattern.

The third filling unit 1380 is configured to fill the location detection pattern separator into the square module array.

The location detection pattern separator occupies i modules in the square module array, and at least one of the i modules is the first-type module. The format information indicates format information of the data during encoding.

In conclusion, according to the two-dimensional code generation device provided in this embodiment, the two-dimensional code is generated based on the filled square module array. The square module array includes m*m modules, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

In this embodiment, the location detection pattern separator occupies i modules in the square module array, and at least one of the i modules is the first-type module, so that the number of light-colored modules is reduced, thereby improving two-dimensional code printing and production efficiency without affecting normal identification of the two-dimensional code.

In this embodiment, a terminal further connects centers of any three candidate location detection patterns to obtain triangles; determines a triangle having a highest similarity with an isosceles right triangle and whose longest side is the longest; and determines, from the three candidate location detection patterns corresponding to the determined triangle, a first location detection pattern, a second location detection pattern, and a third location detection pattern. In this way, the feature of forming an isosceles right triangle by three location detection patterns is fully utilized, to accurately determine the three location detection patterns from multiple groups of location detection patterns, thereby improving accuracy of two-dimensional code identification.

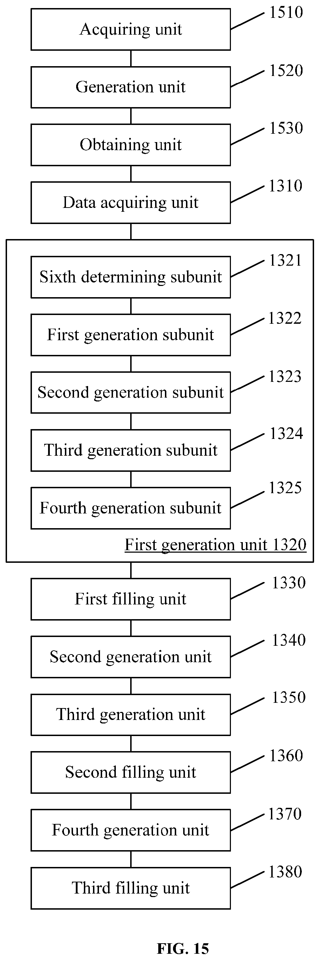

Reference is made to FIG. 15, which is a schematic structural diagram of a two-dimensional code generation device according to still another embodiment of this application. This embodiment is based on the embodiment shown in FIG. 13. The generation device further includes: an acquiring unit 1510, a generation unit 1520, and an obtaining unit 1530.

The acquiring unit 1510 is configured to acquire second data information.

The generation unit 1520 is configured to generate first data information corresponding to the second data information, and a first byte length of the first data information is less than a second byte length of the second data information.

The obtaining unit 1530 is configured to obtain a preset correspondence based on the first data information and the second data information. The preset correspondence includes a correspondence between the first data information and the second data information.

The data is first data information. The second data information includes at least one of: a uniform resource locator URL, image information, audio information, text information, video information, and a lottery result.

In conclusion, according to the two-dimensional code generation device provided in this embodiment, a two-dimensional code is generated based on the filled square module array. The square module array includes m*m modules, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

In this embodiment, the location detection pattern separator occupies i modules in the square module array, and at least one of the i modules is the first-type module, so that the number of light-colored modules is reduced, thereby improving two-dimensional code printing and production efficiency without affecting normal identification of the two-dimensional code.

In this embodiment, first data information corresponding to second data information is further generated, and a first byte length of the first data information is less than a second byte length of the second data information. In this case, even if the second byte length of the second data information is long, the two-dimensional code can still be generated. The two-dimensional code has a much smaller area than that of a regular two-dimensional code, but has a use range that is not significantly different from that of the regular two-dimensional code.

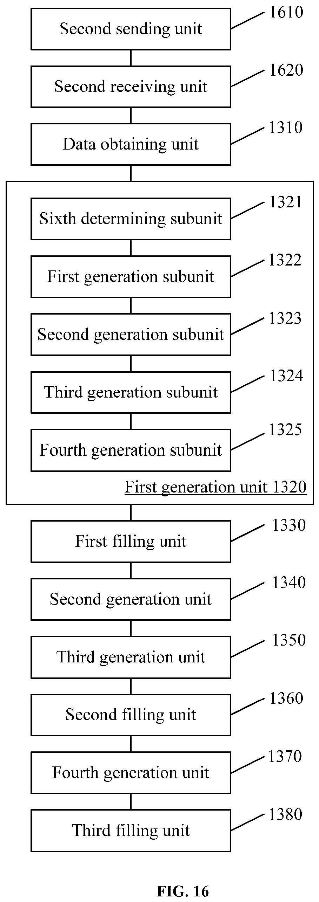

Reference is made to FIG. 16, which is a schematic structural diagram of a two-dimensional code generation device according to yet another embodiment of this application. This embodiment is based on the embodiment shown in FIG. 13. The generation device further includes: a second sending unit 1610 and a second receiving unit 1620.

The second sending unit 1610 is configured to send the second data information to a server.

The second receiving unit 1620 is configured to receive the first data information fed back by the server. A first byte length of the first data information is less than a second byte length of the second data information.

The data is first data information. The second data information includes at least one of: a uniform resource locator URL, image information, audio information, text information, video information, and a lottery result.

In an implementation, the first data information is obtained by performing hash calculation on the second data information.

In an implementation, the first data information is from a first data information repository and allocated for the second data information. The first data information repository includes unused first data information.

In conclusion, according to the two-dimensional code generation device provided in this embodiment, the two-dimensional code is generated based on the filled square module array. The square module array includes m*m modules, where m is equal to 17, 18, 19 or 20. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

In this embodiment, the location detection pattern separator occupies i modules in the square module array, and at least one of the i modules is the first-type module, so that the number of light-colored modules is reduced, thereby improving two-dimensional code printing and production efficiency without affecting normal identification of the two-dimensional code.

In this embodiment, first data information corresponding to second data information is further generated, and a first byte length of the first data information is less than a second byte length of the second data information. In this way, even if the second byte length of the second data information is long, the two-dimensional code can still be generated. The two-dimensional code has a much smaller area than that of a regular two-dimensional code, but has a use range that is not significantly different from that of the regular two-dimensional code.

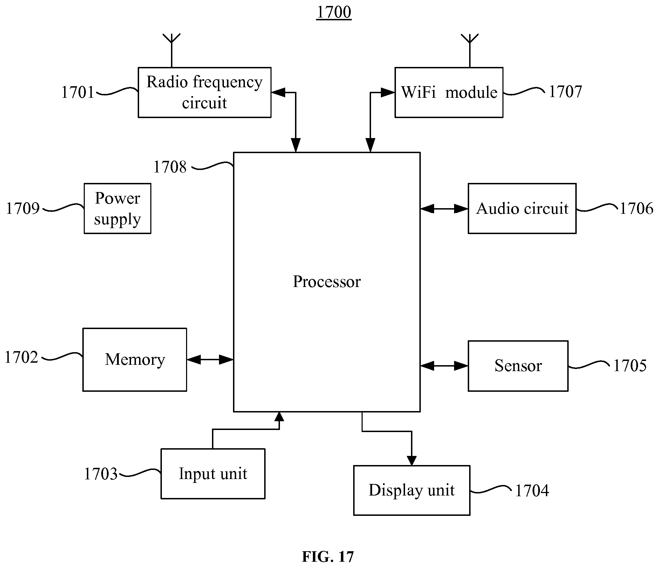

Reference is made to FIG. 17, which is a block diagram of a terminal 1700 according to an embodiment of this application. The terminal may include components such as a radio frequency (RF) circuit 1701, a memory 1702 that includes one or more computer-readable storage media, an input unit 1703, a display unit 1704, a sensor 1705, an audio circuit 1706, a Wireless Fidelity (Wi-Fi) module 1707, a processor 1708 that includes one or more processing cores, and a power supply 1709. A person skilled in the art may understand that the structure of the terminal shown in FIG. 17 does not constitute a limitation to the terminal, and the terminal may include more components or fewer components than those shown in the figure, some components may be combined, or different component arrangement may be used.

The RF circuit 1701 may be configured to receive and send signals during information receiving and sending or during a call. Particularly, the RF circuit 1701 receives downlink information from a base station, then delivers the downlink information to one or more processors 1708 for processing, and sends related uplink data to the base station. Generally, the RF circuit 1701 includes but is not limited to an antenna, at least one amplifier, a tuner, one or more oscillators, a subscriber identity module (SIM) card, a transceiver, a coupler, a low noise amplifier (LNA), a duplexer, and the like. In addition, the RF circuit 1701 may also communicate with a network and another device by means of wireless communication. The wireless communication may use any communications standard or protocol, which includes but is not limited to, Global System for Mobile Communications (GSM), general packet radio service (GPRS), Code Division Multiple Access (CDMA), Wideband Code Division Multiple Access (WCDMA), Long Term Evolution (LTE), email, short message service (SMS), and the like.

The memory 1702 may be configured to store a software program and module. The processor 1708 runs the software program and module stored in the memory 1702, to implement various functional applications and data processing. The memory 1702 may mainly include a program storage area and a data storage area. The program storage area may store an operating system, an application program required by at least one function (such as a sound playing function and an image playing function), and the like. The data storage area may store data (such as audio data and a telephone book) generated according to use of the terminal, and the like. In addition, the memory 1702 may include a high speed random access memory, and may further include a non-volatile memory, such as at least one magnetic disk storage device, a flash memory, or other volatile solid-state storage devices. Correspondingly, the memory 1702 may further include a memory controller, to provide access to the memory 1702 by the processor 1708 and the input unit 1703.

The input unit 1703 may be configured to receive input digit or character information, and generate a keyboard, mouse, joystick, optical or track ball signal input related to the user setting and function control. Specifically, in an embodiment, the input unit 1703 may include a touch-sensitive surface and another input device. The touch-sensitive surface, which may also be referred to as a touch screen or a touch panel, may collect a touch operation of a user on or near the touch-sensitive surface (such as an operation of a user on or near the touch-sensitive surface by using any suitable object or accessory such as a finger or a stylus), and drive a corresponding connection apparatus according to a preset program. Optionally, the touch-sensitive surface may include two parts: a touch detection device and a touch controller. The touch detection device detects a touch location of the user, detects a signal generated by the touch operation, and transfers the signal to the touch controller. The touch controller receives touch information from the touch detection device, converts the touch information into touch point coordinates, and then sends the touch point coordinates to the processor 1708. Moreover, the touch controller can receive and execute a command sent from the processor 1708. In addition, the touch-sensitive surface may be implemented in multiple types, such as a resistive type, a capacitive type, an infrared type, and a surface acoustic wave type. In addition to the touch-sensitive surface, the input unit 1703 may further include another input device. Specifically, the another input device may include but is not limited to one or more of a physical keyboard, a function key (for example, a volume control key or a power on/off key), a trackball, a mouse, or a joystick.

The display unit 1704 may be configured to display information input by the user or information provided for the user and various graphic user interfaces of the terminal, where the graphic user interfaces may include a figure, a text, an icon, a video, and any combination thereof. The display unit 1704 may include a display panel. Optionally, the display panel may be configured in a form of a liquid crystal display (LCD), an organic light-emitting diode (OLED), or the like. Further, the touch-sensitive surface may cover the display panel. After detecting a touch operation on or near the touch-sensitive surface, the touch-sensitive surface transfers the touch operation to the processor 1708 to determine a type of a touch event, and then the processor 1708 provides corresponding visual output on the display panel according to the type of the touch event. Although in FIG. 17, the touch-sensitive surface and the display panel function as two separate parts to implement input and output functions, in some embodiments, the touch-sensitive surface and the display panel may be integrated to implement the input and output functions.

The terminal may further include at least one sensor 1705 such as an optical sensor, a motion sensor, and other sensors. Specifically, the optical sensor may include an ambient light sensor and a proximity sensor. The ambient light sensor may adjust luminance of the display panel according to brightness of the ambient light. The proximity sensor may switch off the display panel and/or backlight when the terminal is moved close to an ear. As one type of the motion sensor, a gravity acceleration sensor may detect a value of acceleration in all directions (which generally indicates three axis), may detect a value and a direction of the gravity when being static, and may be configured to identify an application of a mobile phone gesture (such as switching between horizontal and longitudinal screens, a related game, and gesture calibration of a magnetometer), a related function of vibration identification (such as a pedometer and a knock), and the like. Another sensor, such as a gyroscope, a barometer, a hygrometer, a thermometer, and an infrared sensor, may be provided in the terminal, which is not described herein again.

The audio circuit 1706, a speaker, and a microphone may provide audio interfaces between the user and the terminal. The audio circuit 1706 may convert received audio data into an electrical signal and transmit the electrical signal to the speaker. The speaker converts the electrical signal into a sound signal for output. On the other hand, the microphone converts a collected sound signal into an electrical signal. The audio circuit 1706 receives the electrical signal and converts the electrical signal into audio data, and outputs the audio data to the processor 1708 for processing. Then, the processor 1708 sends the audio data to, for example, another terminal via the RF circuit 1701, or outputs the audio data to the memory 1702 for further processing. The audio circuit 1706 may further include an earplug jack, to provide communication between a peripheral earphone and the terminal.

Wi-Fi belongs to a short distance wireless transmission technology. The terminal may help, via the Wi-Fi module 1707, a user to receive and send an email, browse a web page, and access stream media, and the like, which provides wireless broadband Internet access for the user. Although FIG. 17 shows the Wi-Fi module 1707, it may be understood that the wireless communications unit is not a necessary component of the terminal, and when required, the the Wi-Fi module may be omitted as long as the scope of the essence of the present disclosure is not changed.

The processor 1708 is a control center of the terminal, which is connected to various parts of the mobile phone by using various interfaces and lines. The processor 1708 runs or executes a software program and/or module stored in the memory 1702 and calls data stored in the memory 1702, to perform various functions of the terminal and data processing, so as to perform overall monitoring on the mobile phone. Optionally, the processor 1708 may include one or more processing cores. Preferably, the processor 1708 may integrate an application processor and a modem processor. The application processor mainly processes an operating system, a user interface, an application program, and the like. The modem processor mainly processes wireless communication. It may be understood that the foregoing modem processor may not be integrated into the processor 1708.

The terminal further includes the power supply 1709 (such as a battery) for supplying power to the components. Preferably, the power supply may be logically connected to the processor 1708 by using a power management system, thereby implementing functions such as charging, discharging, and power consumption management by using the power management system. The power supply 1709 may further include one or more of a direct current or alternating current power supply, a re-charging system, a power failure detection circuit, a power supply converter or inverter, a power supply state indicator, and any other components.

Although not shown in the figure, the terminal may further include a camera, a Bluetooth module, and the like, which are not described herein. Specifically, in this embodiment, the processor 1708 in the terminal runs one or more program instructions stored in the memory 1702, to implement the identification and generation methods provided in the foregoing method embodiments.

A person of ordinary skill in the art may understand that all or some of the steps in the identification method and generation method in the foregoing embodiments may be implemented by relevant hardware instructed by a program. The program may be stored in a computer-readable storage medium. The storage medium may include: a read-only memory (ROM), a random access memory (RAM), a magnetic disk, an optical disc, or the like.

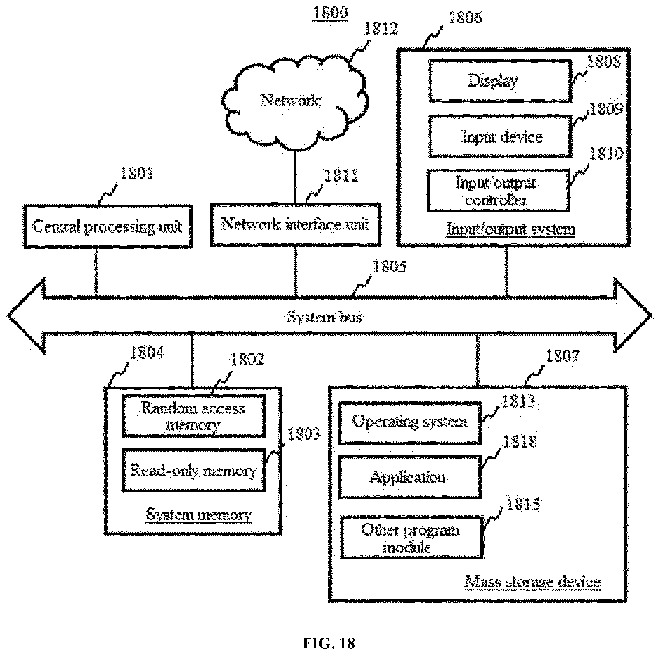

Reference is made to FIG. 18, which is a structural framework diagram of a server according to an embodiment of this application. A server 1800 includes a central processing unit (CPU) 1801, a system memory 1804 including a RAM 1802 and a ROM 1803, and a system bus 1805 connecting the system memory 1804 and the CPU 1801. The server 1800 further includes a basic input/output system (I/O system) 1806 configured to transmit information between components in a computer, and a mass storage device 1807 configured to store an operating system 1813, an application program 1818, and another program module 1818.

The basic I/O system 1806 includes a display 1808 configured to display information, and an input device 1809 configured to input information by a user, such as a mouse and a keyboard. The display 1808 and the input device 1809 are both connected to the CPU 1801 by using an input/output controller 1810 connected to the system bus 1805. The basic I/O system 1806 may further include the input/output controller 1810, so as to receive and process input from multiple other devices, such as the keyboard, the mouse, or an electronic stylus. Similarly, the input/output controller 1810 further provides an output to a display screen, a printer or another type of output device.

The mass storage device 1807 is connected to the CPU 1801 by using a mass storage controller (not shown) connected to the system bus 1805. The mass storage device 1807 and an associated computer-readable medium provide non-volatile storage for the server 1800. That is, the mass storage device 1807 may include a computer-readable medium (not shown) such as a hard disk or a CD-ROM.

In general, the computer-readable medium may include a computer storage medium and a communications medium. The computer storage medium includes volatile and non-volatile media, and removable and non-removable media implemented by using any method or technology and used for storing information such as a computer-readable instruction, a data structure, a program module, or other data. The computer storage medium includes a RAM, a ROM, an EPROM, an EEPROM, a flash memory or other solid storage devices; a CD-ROM, a DVD or other optical storages; and a cassette, a magnetic tape, a disk storage or other magnetic storage devices. Certainly, a person skilled in the art may know that the computer storage medium is not limited to the medium described above. The system memory 1804 and the mass storage device 1807 may be collectively referred to as a memory.

According to the embodiments of the present disclosure, the server 1800 may further be connected to a remote computer on a network over a network such as the Internet. That is, the server 1800 may be connected to a network 1812 by using a network interface unit 1811 connected to the system bus 1805, or may be connected to another type of network or a remote computer system (not shown) by using a network interface unit 1811.

In an implementation, the CPU 1801 in the server runs one or more program instructions stored in the memory 1804, to implement the identification and generation methods provided in the foregoing method embodiments.

The memory further includes one or more programs, where the one or more programs are stored in the memory, and the one or more programs include instructions for performing the identification and generation methods provided in the embodiments of the present disclosure.

In addition, according to an embodiment of this application, a non-volatile storage medium is further provided, which stores one or more computer programs. The computer program includes processor-executable instructions. The instructions, when being executed by a computer, cause the computer to perform the identification and generation methods provided in the method embodiments. The non-volatile storage medium may be located in the terminal or the server described above.

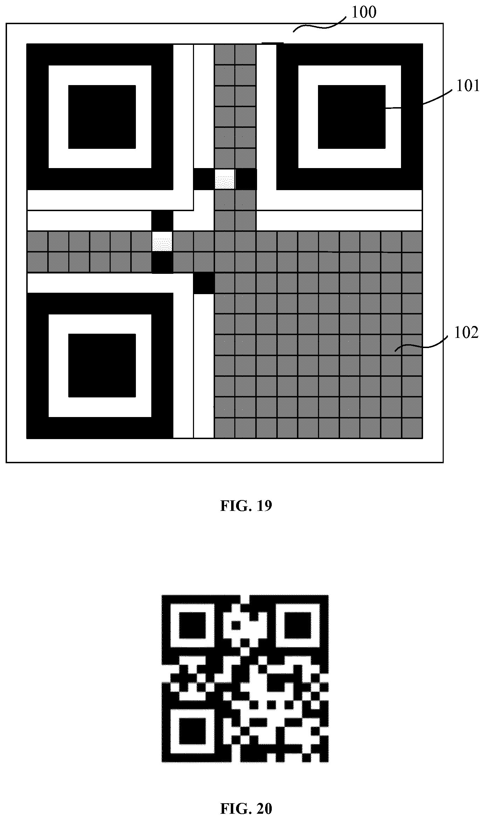

Reference is made to FIG. 19, which is a schematic structural diagram of a two-dimensional code according to an embodiment of this application. For details not elaborated in this embodiment, one may refer to the embodiments in FIG. 1 to FIG. 3. The two-dimensional code 100 includes a square module array consisting of m*m modules. The square module array includes a location detection pattern 101 and a data information pattern 102.

The location detection pattern 101 is used for determining a location of the two-dimensional code. The location detection pattern 101 may include three identical location detection patterns. The three location detection patterns are separately distributed on an upper left corner, an upper right corner, and a lower left corner of the two-dimensional code.

The data information pattern 102 is used for carrying data. The data information pattern 102 is shown by a shadow area indicated by an oblique line box in FIG. 1.

Each of the modules is a first-type module or a second-type module, and a color attribute of the first-type module is different from a color attribute of the second-type module. The module is a minimal identification unit in a two-dimensional code. In an implementation, the module is a square.

In an implementation, the first-type module is a dark-colored module, indicating a binary number 1, and the second-type module is a light-colored module, indicating a binary number 0.

Generally, the color attribute of the first-type module is black, and the color attribute of the second-type module is white. The color attribute of the module is not limited in this embodiment. It should be noted that in different embodiments, the square module array may also be referred to as a square array, a matrix array, a square matrix, or a square matrix array.

FIG. 20 shows a two-dimensional code pattern generated by using a square module array according to an embodiment of this application.

In conclusion, according to the miniature two-dimensional code provided in this embodiment, the miniature two-dimensional code includes a square module array consisting of m*m modules. Even if printed in a miniature area whose side length ranges from 0.5 cm to 0.7 cm, the two-dimensional code can still be normally identified, and is suitable to be applied in a small area scenario such as an inner side of a bottle cap or a corner of an object.

It should be noted that a specific type of the two-dimensional code is not limited in this embodiment. The miniature two-dimensional code may be provided by means of ink-jet printing, pasting, laser printing, electronic display, or the like. The manner of providing the two-dimensional code is not limited in this embodiment.

## Claims

1. An object on which a two-dimensional code is provided, wherein
the two-dimensional code comprises a square module array (200) consisting of m*m modules;
each of the modules is a first-type module or a second-type module;
a color attribute of the first-type module is different from a color attribute of the second-type module;
the color attribute of the first-type module is black and the color attribute of the second-type module is white;
the square module array (200) comprises a location detection pattern (201), a data information pattern (202) and a location detection pattern separator (204);
the location detection pattern (201) is used for determining a location of the two-dimensional code;
the data information pattern (202) is used for carrying data;
the location detection pattern separator (204) is used
- for separating the location detection pattern (201) from a format information (203) that indicates format information of the data during encoding or
- for separating the location detection pattern (201) from the data information pattern (202); and
the location detection pattern separator (204) occupies a plurality of modules in the square module array (200),
wherein if, starting out from a first corner of the square module array (200), the m modules in a first dimension of the square module array (200) are numbered from 0 to m - 1 and the m modules in the second dimension of the square module array (200) are numbered from 0 to m - 1, the location detection pattern (201) and the location detector pattern separator (204) are defined as follows:
the location detection pattern (201a) consists of the 7*7 modules with numbers ranging from 0 to 6 in the first dimension and numbers ranging from 0 to 6 in the second dimension and the location detection pattern separator (204a) consists of the eight modules with number 7 in the second dimension and with numbers ranging from 0 to 7 in the first dimension and the seven modules with numbers ranging from 0 to 6 in the second dimension and with number 7 in the first dimension,
or
the location detection pattern (201b) consists of the 7*7 modules with numbers ranging from m - 7 to m - 1 in the first dimension and numbers ranging from 0 to 6 in the second dimension and the location detection pattern separator (204b) consists of the eight modules with number 7 in the second dimension and with numbers ranging from m - 8 to m - 1 in the first dimension and the seven modules with numbers ranging from 0 to 6 in the second dimension and with number m - 8 in the first dimension,
or
the location detection pattern (201c) consists of the 7*7 modules with numbers ranging from 0 to 6 in the first dimension and numbers ranging from m - 7 to m - 1 in the second dimension and the location detection pattern separator (204c) consists of the eight modules with number m - 8 in the second dimension and with numbers ranging from 0 to 7 in the first dimension and the seven modules with numbers ranging from m - 7 to m - 1 in the second dimension and with number 7 in the first dimension,
**characterized in that** m is equal to 17, 18, 19 or 20 and at least one of the plurality of modules occupied by the location detection pattern separator (204) in the square module array (200) is the first-type module.

2. The object according to claim 1, wherein
the data information pattern (202) carries a data codeword and an error correction codeword corresponding to the data codeword, and the data information pattern carries (202) sixteen data blocks;
each of the data blocks occupies eight modules in the square module array (200); and
at least one of the data blocks occupies eight modules adjacent to each other in the square module array (200).

## Patentansprüche

1. Objekt, auf dem ein zweidimensionaler Code angebracht ist, wobei
der zweidimensionale Code ein Array quadratischer Module (200), das aus m*m Modulen besteht, umfasst;
jedes der Module ein Modul eines ersten Typs oder ein Modul eines zweiten Typs ist;
ein Farbattribut des Moduls des ersten Typs sich von einem Farbattribut des Moduls des zweiten Typs unterscheidet;
das Farbattribut des Moduls des ersten Typs schwarz ist und das Farbattribut des Moduls des zweiten Typs weiß ist;
das Array quadratischer Module (200) ein Positionserkennungsmuster (201), ein Dateninformationsmuster (202) und einen Positionserkennungsmuster-Separator (204) umfasst;
das Positionserkennungsmuster (201) zur Bestimmung einer Position des zweidimensionalen Codes verwendet wird;
das Dateninformationsmuster (202) zum Tragen von Daten verwendet wird;
der Positionserkennungsmuster-Separator (204) verwendet wird
- zum Separieren des Positionserkennungsmusters (201) von einer Formatinformation (203), die eine Formatinformation der Daten während der Kodierung angibt, oder
- zum Separieren des Positionserkennungsmusters (201) von dem Dateninformationsmuster (202); und
der Positionserkennungsmuster-Separator (204) eine Mehrzahl von Modulen in dem Array quadratischer Module (200) belegt,
wobei, wenn, ausgehend von einer ersten Ecke des Arrays quadratischer Module (200), die m Module in einer ersten Dimension des Arrays quadratischer Module (200) von 0 bis m - 1 nummeriert sind und die m Module in der zweiten Dimension des Arrays quadratischer Module (200) von 0 bis m - 1 nummeriert sind, das Positionserkennungsmuster (201) und der Positionserkennungsmuster-Separator (204) wie folgt definiert sind:
das Positionserkennungsmuster (201a) besteht aus den 7*7 Modulen mit Nummern von 0 bis 6 in der ersten Dimension und Nummern von 0 bis 6 in der zweiten Dimension und der Positionserkennungsmuster-Separator (204a) besteht aus den acht Modulen mit Nummer 7 in der zweiten Dimension und mit Nummern von 0 bis 7 in der ersten Dimension und den sieben Modulen mit Nummern von 0 bis 6 in der zweiten Dimension und mit Nummer 7 in der ersten Dimension,
oder
das Positionserkennungsmuster (201b) besteht aus den 7*7 Modulen mit Nummern von m - 7 bis m - 1 in der ersten Dimension und Nummern von 0 bis 6 in der zweiten Dimension und der Positionserkennungsmuster-Separator (204b) besteht aus den acht Modulen mit Nummer 7 in der zweiten Dimension und mit Nummern von m - 8 bis m - 1 in der ersten Dimension und den sieben Modulen mit Nummern von 0 bis 6 in der zweiten Dimension und mit Nummer m - 8 in der ersten Dimension,
oder
das Positionserkennungsmuster (201c) besteht aus den 7*7 Modulen mit Nummern von 0 bis 6 in der ersten Dimension und Nummern von m - 7 bis m - 1 in der zweiten Dimension und der Positionserkennungsmuster-Separator (204c) besteht aus den acht Modulen mit Nummer m - 8 in der zweiten Dimension und mit Nummern von 0 bis 7 in der ersten Dimension und den sieben Modulen mit Nummern von m - 7 bis m - 1 in der zweiten Dimension und mit Nummer 7 in der ersten Dimension,
**dadurch gekennzeichnet, dass** m gleich 17, 18, 19 oder 20 ist und mindestens eines der Mehrzahl von Modulen, die durch den Positionserkennungsmuster-Separator (204) in dem Array quadratischer Module (200) belegt sind, das Modul des ersten Typs ist.

2. Objekt nach Anspruch 1, wobei
das Dateninformationsmuster (202) ein Datencodewort und ein dem Datencodewort entsprechendes Fehlerkorrekturcodewort trägt, und das Dateninformationsmuster (202) sechzehn Datenblöcke trägt;
jeder der Datenblöcke acht Module in dem Array quadratischer Module (200) belegt; und
mindestens einer der Datenblöcke acht nebeneinander liegende Module in dem Array quadratischer Module (200) belegt.

## Revendications

1. Objet qui est pourvu d'un code bidimensionnel, dans lequel
le code bidimensionnel comprend un réseau de modules carrés (200) constitué de m*m modules;
chacun des modules est un module de premier type ou un module de deuxième type;
un attribut de couleur du module de premier type est différent d'un attribut de couleur du module de deuxième type;
l'attribut de couleur du module de premier type est noir et l'attribut de couleur du module de deuxième type est blanc;
le réseau de modules carrés (200) comprend un motif de détection d'emplacement (201), un motif d'information de données (202) et un séparateur de motif de détection d'emplacement (204);
le motif de détection d'emplacement (201) est utilisé pour déterminer un emplacement du code bidimensionnel;
le motif d'information de données (202) est utilisé pour porter des données;
le séparateur de motif de détection d'emplacement (204) est utilise
- pour séparer le motif de détection d'emplacement (201) d'une information de format (203) qui indique une information de format des données pendant le codage ou
- pour séparer le motif de détection d'emplacement (201) du motif d'information de données (202); et
le séparateur de motif de détection d'emplacement (204) occupe une pluralité de modules dans le réseau de modules carrés (200),
dans lequel si, en partant d'un premier coin du réseau de modules carrés (200), les m modules dans une première dimension du réseau de modules carrés (200) sont numérotés de 0 à m - 1 et les m modules dans la deuxième dimension du réseau de modules carrés (200) sont numérotées de 0 à m - 1, le motif de détection d'emplacement (201) et le séparateur de motif de détection d'emplacement (204) sont définis comme suit:
le motif de détection d'emplacement (201a) est constitué des 7*7 modules avec des numéros allant de 0 à 6 dans la première dimension et des numéros allant de 0 à 6 dans la deuxième dimension et le séparateur de motif de détection d'emplacement (204a) est constitué des huit modules numérotés de 7 dans la deuxième dimension et numérotés de 0 à 7 dans la première dimension et les sept modules numérotés de 0 à 6 dans la deuxième dimension et numérotés de 7 dans la première dimension,
ou
le motif de détection d'emplacement (201b) est constitué des 7*7 modules avec des numéros allant de m - 7 à m - 1 dans la première dimension et des numéros allant de 0 à 6 dans la deuxième dimension et le séparateur de motif de détection d'emplacement (204b) est constitué des huit modules numérotés de 7 dans la deuxième dimension et numérotés de m - 8 à m - 1 dans la première dimension et des sept modules numérotés de 0 à 6 dans la deuxième dimension et numérotés m - 8 dans la première dimension,
ou
le motif de détection d'emplacement (201c) est constitué des 7*7 modules avec des numéros allant de 0 à 6 dans la première dimension et des numéros allant de m - 7 à m - 1 dans la deuxième dimension et le séparateur de motif de détection d'emplacement (204c) est constitué des huit modules numérotés m - 8 dans la deuxième dimension et numérotés de 0 à 7 dans la première dimension et des sept modules numérotés de m - 7 à m - 1 dans la deuxième dimension et numérotés de 7 dans la première dimension,
**caractérisé par le fait que** m est égal à 17, 18, 19 ou 20 et au moins l'un de la pluralité de modules occupés par le séparateur de motif de détection d'emplacement (204) dans le réseau de modules carrés (200) est le module de premier type.

2. Objet selon la revendication 1, dans lequel
le motif d'information de données (202) porte un mot de code de données et un mot de code de correction d'erreur correspondant au mot de code de données, et le motif d'information de données (202) porte seize blocs de données;
chacun des blocs de données occupe huit modules dans le réseau de modules carrés (200); et
au moins un des blocs de données occupe huit modules adjacents les uns aux autres dans le réseau de modules carrés (200).
